# EUROPÄISCHE PATENTSCHRIFT

(11) **EP 1 093 427 B1**
(45) Veröffentlichungstag und Bekanntmachung des Hinweises auf die Patenterteilung: **10.11.2004**
(21) Anmeldenummer: 99936508.3
(22) Anmeldetag: 09.07.1999
(51) Int. Cl.: B60T 1/00

(54) **VERFAHREN UND VORRICHTUNG ZUR BREMSDRUCKEINSTELLUNG UND ZUM ÖFFNEN EINES EINLASSVENTILS**
METHOD AND DEVICE FOR ADJUSTING BRAKE PRESSURE AND FOR OPENING AN INLET VALVE
PROCEDE ET DISPOSITIF POUR AJUSTER LA PRESSION DE FREINAGE ET POUR OUVRIR UNE SOUPAPE D'ADMISSION

(30) Priorität: 09.07.1998 DE 19830702; 18.09.1998 DE 19842872
(43) Veröffentlichungstag der Anmeldung: 25.04.2001
(73) Patentinhaber: Continental Teves AG & Co. OHG, 60488 Frankfurt am Main (DE)
(72) Erfinder: GRONAU, Ralph, D-35083 Wetter (DE); SCHELLER, Tobias, D-65931 Frankfurt am Main (DE)
(86) Internationale Anmeldenummer: PCT/EP1999/004843
(87) Internationale Veröffentlichungsnummer: WO 2000/002753

(56) Entgegenhaltungen:
- EP-A- 0 465 820
- WO-A-92/17356
- WO-A-96/10507
- WO-A-96/15927
- WO-A-97/23373
- DE-A- 3 834 539
- DE-A- 3 935 395
- DE-A- 4 440 517
- DE-A- 19 501 760
- GB-A- 2 280 762

## Beschreibung

Die Erfindung betrifft ein Verfahren und eine Vorrichtung zur Bremsdruckeinstellung und zum Öffnen eines Einlaßventils gemäß den Oberbegriffen der unabhängigen Ansprüche.

Moderne Fahrzeugbremsanlagen weisen neben einer primären Druckquelle für Hydraulikfluid (beispielsweise dem Bremszylinder/Tandem-Hauptzylinder) eine oder mehrere hydraulische Pumpen auf, mit denen für bestimmte Zwecke auch bzw. zusätzlich unter Druck stehenden hydraulisches Fluid gefördert werden kann. Beispielsweise handelt es sich hierbei um Pumpen, die am Ventilblock vorgesehen sind und die über einen Elektromotor und einen Exzenter betätigt werden. Zweck dieser Pumpen ist der aktive Druckaufbau für bestimmte Steuerungs- bzw. Regelungszwecke, wenn der von der Hauptdruckquelle stammende Bremsdruck nicht ausreicht, um das Regelungsziel zu erreichen. Als Beispiel kann die Antriebsschlupfregelung genannt werden. In der Regel wird dann, wenn Antriebsschlupf vorliegt, seitens des Fahrers überhaupt nicht gebremst, so daß die primäre Druckquelle keinen Druck liefert. Gleichwohl kann zur Regelung des Antriebsschlupfs ein aktiver Druckaufbau insbesondere an den Bremsen der angetriebenen Räder wünschenswert sein, so daß eine Einrichtung zum Druckaufbau vorzusehen ist. Diese Einrichtung kann die eingangs genannte Pumpe sein.

Bisher wird eine solche Pumpe elektrisch an- bzw. ausgeschaltet. Die Fördermenge - und damit mittelbar der Bremsdruck - wird auf zwei verschiedene Weisen eingestellt: Zum einen kann das Fördervolumen der Pumpe ansaugseitig begrenzt werden, beispielsweise indem ein Ventil zwischen Fluidreservoir und Pumpe nach Maßgabe bestimmter Kriterien geöffnet und geschlossen wird. Dies hat den Nachteil, daß ansaugseitig die Pumpe einen Unterdruck erzeugt, was zu Dichtigkeitsproblemen führen kann, beispielsweise bei mit der Saugseite der Pumpe verbundenen Niederdruckspeichern. Eine andere Möglichkeit zur Einstellung des Bremsdrucks ist es, die Einlaßventile einer Radbremse zur Druckeinstellung zu betätigen. Dies hat jedoch den Nachteil, daß die Pumpe gegen die geschlossenen Ventile arbeiten. Dadurch werden Geräusche erzeugt, die wie der ABS-Eingriff für den Fahrer hörbar werden und die den Eindruck hinterlassen, daß eine alarmierende Fahrsituation vorliegt, obwohl dies nicht unbedingt der Fall sein muß (beispielsweise bei einem Anfahrvorgang mit Antriebsschlupfregelung.

Die bekannte Einbauweise von Einlaßventilen erfordert außerdem Rückschlagventile, um ein Festsetzen der Ventile zu vermeiden. Vergleichsweise häufig tritt der Fall auf, daß ausgehend von einer ABS-Bremsung fahrerseitig der Bremsdruck abgesenkt wird, wobei das Einlaßventil der Radbremse geschlossen ist. Dann tritt der Fall auf, daß auslaßseitig (bremsenseitig) am Einlaßventil ein höherer Druck vorliegt als einlaßseitig/(druckquellenseitig). Um ein Festsetzen der Ventile in dieser Situation zu vermeiden, sind Rückschlagventile vorgesehen, die rückwärts den Druckabbau am Einlaßventil vorbei zulassen. Durch das Vorsehen dieser Rückschlagventile wird der Aufbau eines Ventilblocks weiter kompliziert.

Ferner ist aus der DE 44 405 17 A1 ein Verfahren und eine Vorrichtung zur Ansteuerung einer Rückförderpumpe einer Bremsanlage bekannt, bei der ein Bremsdruck von der Rückförderpumpe in Abhängigkeit von einem die Fahrgeschwindigkeit eines Fahrzeugs beeinflußbaren Regler steuerbar ist. Die Ansteuerung zur Bremsdruckeinstellung erfolgt dabei nach Maßgabe der Radgeschwindigkeiten.

Darüber hinaus ist aus der gattungsgemäßen WO-A-97/23373 eine Vorrichtung bekannt, bei der die Pumpe graduell in Abhängigkeit vom Soll-/Istdruck angesteuert wird.

Aufgabe der Erfindung ist es, ein verbessertes Verfahren und Vorrichtung zur Bremsdruckeinstellung und zum Öffnen eines Einlaßventils anzugeben.

Diese Aufgabe wird mit den Merkmalen der unabhängigen Ansprüche gelöst. Abhängige Ansprüche sind auf bevorzugte Ausführungsformen der Erfindung gerichtet.

Zur Bremsdruckeinstellung wird die Pumpe elektrisch dergestalt angesteuert, daß sie graduell betrieben wird, d.h., daß auch Betriebszustände/Fördermengen/Drehzahlen zwischen an und aus eingestellt werden. Beispielsweise kann der Elektromotor der Pumpe ein pulsbreitenmoduliertes Signal empfangen, so daß dessen Drehzahl und damit die Förderleistung kontinuierlich bzw. quasi kontinuierlich zwischen 0 und 100 % der maximalen Fördermenge eingestellt werden kann. Dadurch können die im Stand der Technik bekannten Strategien zur Bremsdruckeinstellung (saugseitige Begrenzung oder Begrenzung durch die Einlaßventile vor der Radbremse) entfallen, so daß auch die damit einhergehenden Nachteile entfallen. Die Pumpe selbst kann dann das maßgebliche Stellglied zur Einstellung des Bremsdrucks sein, Einlaßventil und das Ventil auf der Saugseite der Pumpe können voll geöffnet bleiben.

Nach einer vorteilhaften Ausbildung erhält die Pumpe pulsweitenmodulierte Minimalimpulse zwischen 5 und 20 Millisekunden (ms), deren minimalste Zeitdauer von der verwendeten Zeitgeber- oder Verzögerungsschaltung so festgelegt wird, daß hohe "Abschaltströme" vermieden werden, um thermische Belastungen der Schaltung zu vermeiden. Dabei wird die Pumpe nach Maßgabe des ermittelten Bremsdruckes oder Solldruckes in Abhängigkeit von ihrer Generatorspannung und/oder ihrer Förderleistung und /oder ihrer Drehzahl graduell angesteuert. Durch diese Maßnahme wird der ermittelte, vorzugsweise in einem Druckmodell berechnete, Bremsdruck oder Solldruck auch bei abgeschalteter Pumpe zuerst aus dem Fördervolumen des Pumpennachlaufs eingestellt, bevor eine erneute graduelle Ansteuerung der Pumpe mit Minimalimpulsen erfolgt. Für die erneute graduelle Ansteuerung der Pumpe muß wenigstens eine der Bedingungen
a ) die Generatorspannung liegt unter einem vorgegebenen Grenzwert und/oder
b ) die Förderleistung der Pumpe liegt unter einem vorgegebenen Grenzwert und/oder
c.) die Drehzahl der Pumpe liegt unter einem vorgegebenen Grenzwert,
erfüllt sein. Alle Grenzwerte liegen dabei in Bändern, die sich nach dem Abschalten der Pumpe einstellen, d.h. unterhalb der Ansteuerungsgrößen der Minimalimpulse. Vorzugsweise ist unterhalb der Grenzwerte kein Druckaufbau bei abgeschalteter Pumpe mehr möglich. Dadurch daß die Pumpe mit Minimalimpulsen angesteuert wird und der bei abgeschalteter Pumpe von der Pumpe im Nachlauf erzeugte Druck zum Bremsdruckaufbau genutzt und die Pumpe nur graduell nach Maßgabe des ermittelten Bremsdruckes oder Solldruckes in Abhängigkeit von ihrer Generatorspannung und/oder Förderleistung und/oder Drehzahl erneut angesteuert wird, werden die Geräuschemissionen verringert, weil sich ein niedrigeres Systemdruckniveau einstellt und Überströmgeräusche durch das Überströmventil reduziert oder ganz vermieden werden. Die Hydraulikkomponenten, insbesondere die Pumpe und das Trennventil, werden weniger belastet. Darüber hinaus wird durch die sanftere und präzisere Annäherung an den Bedarfsdruck die Regelgüte gesteigert.

Zum Öffnen eines geschlossenen Einlaßventils kann die Druckdifferenz zwischen der Einlaßseite und der Auslaßseite des Einlaßventils erfaßt werden. überschreitet diese einen kritischen Wert, kann die genannte Hydraulikpumpe kurz angeschaltet werden, um einlaßseitig am Einlaßventil einen Druckaufbau zu bewirken. Dadurch sinkt die Druckdifferenz, und das Ventil kehrt in die geöffnete (in der Regel stromlose) Position zurück. Dadurch können die vier Rückschlagventile, die jeweils eines der Einlaßventile überbrücken, entfallen.

Bezugnehmend auf die Zeichnungen werden nun einzelne erfindungsgemäße Ausführungsformen beschrieben, es zeigen:
- Fig. 1: eine Bremsanlage, in der die Erfindung angewendet werden kann,
- Fig. 2: ein Beispiel einer erfindungsgemäßen Ansteuerung einer Pumpe,
- Fig. 3: ein weiteres Beispiel einer erfindungsgemäßen Ansteuerung einer Pumpe, und
- Fig. 4: eine Vorrichtung zum Öffnen eines Einlaßventils.

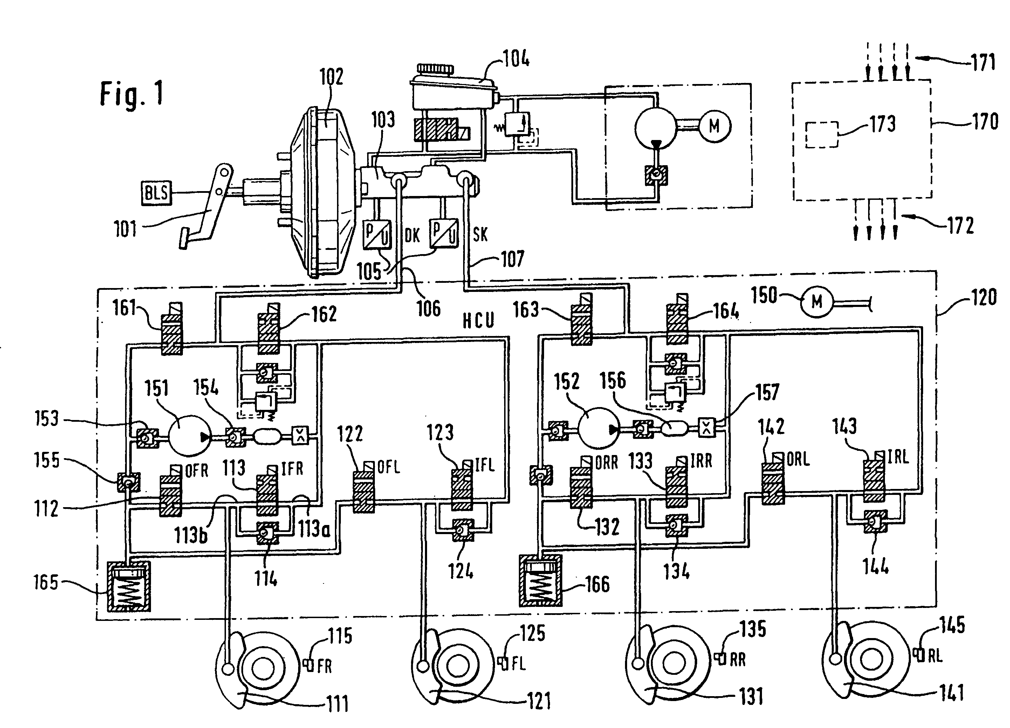

Fig. 1 zeigt schematisch wesentliche Komponenten einer Bremsanlage mit Vorder-Hinterradaufteilung. 101 ist ein Bremspedal, 102 ein Bremskraft-verstärker, 103 ein Bremszylinder (Tandem-Hauptzylinder) und 104 ein Hydraulikfluidreservoir. Der Hauptzylinder erzeugt auslaßseitig einen Bremsdruck primär nach Maßgabe des durch das Bremspedal 101 bekanntgegebenen Fahrerwunsches. Über Hydraulikleitungen 106, 107 wird dieser Bremsdruck dem Ventilblock 120 zugeführt. Ebenfalls mit dem Ventilblock 120 verbunden sind die Radbremsen 111, 121, 131, 141. Einer Radbremse 111 sind ein Einlaßventil 113 und ein Auslaßventil 112 zugeordnet. 113a bezeichnet die Einlaßseite, 113b die Auslaßseite des Einlaßventils 113. In der Regel sind das Einlaßventil stromlos offen und das Auslaßventil stromlos geschlossen. Einlaßseitig empfängt das Einlaßventil 113 unter Druck stehendes Hydraulikfluid von einer Druckquelle, beispielsweise dem Hauptzylinder 103. Außerdem ist eine Hydraulikpumpe 150, 151 für die Radbremse 111 vorgesehen. In der gezeigten Ausführungsform fördert die Hydraulikpumpe ggf. unter Druck stehendes hydraulisches Fluid zur Einlaßseite des Einlaßventils 113. 151 bezeichnet den mechanischen Teil der Pumpe, beispielsweise eine im oder am Ventilblock vorgesehene Exzenterpumpe, 150 den elektrischen, beispielsweise einen Elektromotor. Saugseitig ist die Pumpe 150, 151 allgemein mit einer Hydraulikfluidquelle verbunden. In der gezeigten Ausführungsform bezieht sie Hydraulikfluid vom Hauptzylinder 103.

Anstatt nun wie im Stand der Technik bei maximal arbeitender Pumpe 150, 151 durch saugseitige Begrenzung (mittels erstem Ventil 161) oder durch förderseitige Herunterregelung mittels Einlaßventil 113 den Bremsdruck einzustellen, wird die Pumpe selbst als Stellglied verwendet. Sie wird graduell angesteuert, beispielsweise nach Maßgabe eines ermittelten Bremsdrucks und/oder nach Maßgabe eines gewünschten Solldrucks. Die Pumpe wird dadurch nicht mehr lediglich an- bzw. ausgeschaltet. Vielmehr werden Zwischenzustände angesteuert, so daß der gesamte Betriebsbereich der Pumpe genützt wird. Der elektrische Antrieb 150 der Pumpe 150, 151 kann beispielsweise pulsbreiten-modulierte Signale oder amplitudenvariable Signale empfangen. Allgemein ausgedrückt kann die Energiezufuhr oder die Drehzahl oder die Förderleistung der Pumpe variabel bzw. kontinuierlich zwischen den Extremwerten (Null bzw. Maximalwert) angesteuert werden. Es ist dann nahezu kaum noch notwendig, zur Bremsdruckeinstellung das erste Ventil 161 bzw. das Einlaßventil 113 zur Regelung zu betätigen.
Der Vollständigkeit halber seien noch die übrigen Komponenten bzw. der Gesamtaufbau des Bremssystems erläutert: Die Pumpe 150, 151 liegt zwischen einem saugseitigen Rückschlagventil 153 und einem auslaßseitigen Rückschlagventil 154. Zwischen Auslaß der Pumpe 150, 151 und primärer Druckquelle bzw. Hauptzylinder 103 befindet sich ein zweites Ventil 162, das beispielsweise dann geschlossen werden kann, wenn die Pumpe 150, 151 in Betrieb ist. Dadurch wird sichergestellt, daß das geförderte Fluid durch das Einlaßventil hindurch in die Radbremse gelangt und nicht rückwärts in undefinierte Richtungen strömt. 165 ist ein Niederdruckspeicher, der das über das Auslaßventil 112 ausströmende Hydraulikfluid empfängt. 155 ist ein Rückschlagventil. Das erste Ventil 161 ist in der Regel stromlos geschlossen, das zweite Ventil 162 in der Regel stromlos offen. Parallel zu ihm ist ein Überdruckventil geschaltet. In der gezeigten Ausführungsform wirkt die Pumpe 150, 151 für zwei Radbremsen. Allgemein kann gesagt werden, daß für jedes der Räder bzw. für jede Radbremse 111, 121, 131, 141 individuell Einlaßventile 113, 123, 133, 143 und Auslaßventile 112, 122, 132, 142 sowie Rückschlagventile 114, 124, 134, 144 vorgesehen sind. Hinsichtlich erstem und zweitem Ventil 161, 163, 162, 164 kann die Konstruktion so ausgelegt sein, daß sie jeweils für ein Paar von Radbremsen vorgesehen sind. In der Ausführungsform der Fig. 1 bedient die Pumpe 150, 151 die Radbremsen 111, 121 für die Vorderachse, während die Pumpe 150, 152 die Radbremsen 131, 141 für die Hinterachse bedient. 156 ist ein Ausgleichsbehälter, 157 eine Druckdrossel. In der gezeigten Ausführungsform betätigt ein Elektromotor 150 die beiden mechanischen Pumpen 151, 152. Es können jedoch auch individuelle Motoren bzw. allgemein elektrische Antriebe vorgesehen sein.

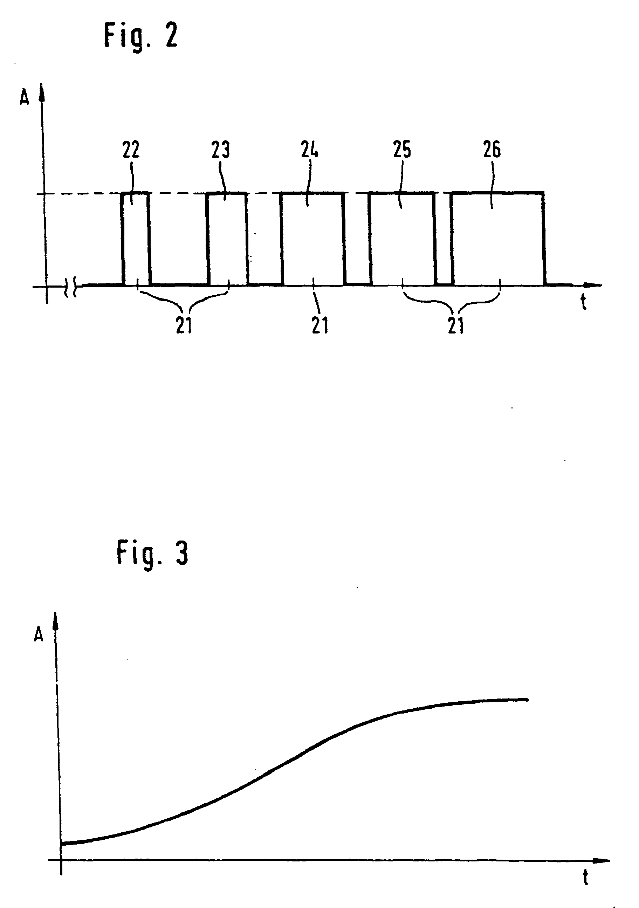

Fig. 2 zeigt ein Beispiel eines pulsbreitenmodulierten Signals, wie es zur Ansteuerung des elektrischen Motors 150 der Pumpen 150 - 152 erzeugt und dem Motor zugeführt werden kann. Mit 21 ist ein zeitliches Raster schematisiert dargestellt, innerhalb dessen jeweils Impulse erzeugt werden. Die Impulse können über die Zeit mehr oder minder lange dauern. Dargestellt sind Impulse 22 - 26, deren Dauer zunimmt. Dadurch nimmt auch die Energiezufuhr zum Motor 150 zu und dementsprechend die Drehzahl bzw. die Förderleistung der Pumpe. Mittelbar kann dadurch der Bremsdruck eingestellt werden.

Eine andere Ausführungsform ist in Fig. 3 gezeigt. Nach dieser Ausführungsform wird dem Motor 150 ein kontinuierliches, analoges Signal zugeführt, das in seiner Amplitude veränderlich ist. Es kann sich beispielsweise um einen allmählich steigenden Gleichstrom handeln. Die Kurve in Fig. 3 kann in bestimmten Fällen auch beispielsweise die Hüllkurve eines Wechselstroms sein.

Die Ansteuerung der Pumpe kann Teil einer Steuerung bzw. Regelung sein. In Fig. 1 ist dies durch die Bezugszeichen 170-172 schematisiert. 170 bezeichnet einen Regler, der Eingangssignale 171 empfängt und Ausgangssignale 172 ausgibt. Die Eingangssignale können Sensorsignale oder Signale von einem Fahrzeug-Datenbus oder interne Signale anderer Regelungskomponenten sein. Die Ansteuersignale 172 können Signale für die elektrisch betätigten Ventile sowie für den Motor 150 sein. Die Signale für den Motor 150 (beispielsweise nach Fig. 2 oder nach Fig. 3) werden dann entsprechend bestimmten Regelungszielen vorgegeben und dem Motor zugeführt.
Bei der beschriebenen Ventilkonfiguration (erstes Ventil stromlos geschlossen, zweites Ventil stromlos offen, Einlaßventil stromlos offen und Auslaßventil stromlos geschlossen) wären bei der erfindungsgemäßen Bremsdruckeinstellung somit Einlaß- und Auslaßventil stromlos gestellt, während das erste Ventil 161 geöffnet wird, um saugseitig der Pumpe 150, 151 Fluid zuzuführen, während das zweite Ventil 162 geschlossen wird, um ein Abfließen des Fluids und insbesondere den Kurzschluß der Pumpe zu verhindern. Sinngemäß das gleiche gilt für die Ventile 163 und 164. Eine bei der erfindungsgemäßen Bremsdruckeinstellung ggf. notwendige Bremsdruckabsenkung kann durch Öffnen des Auslaßventils 112 und/oder durch Öffnen des zweiten Ventils 162 erfolgen.

In modernen Fahrzeugbremssystemen wird der Ist-Bremsdruck modellgestützt ermittelt. Das heißt, daß ausgehend von bekannten Bremsanlagenparametern und unter Einbeziehung der verschiedenen, den jeweiligen Bremsdruck beeinflussenden Signale der Bremsdruck in den einzelnen Radbremsen errechnet wird. Erfolgt der Übergang hin auf die erfindungsgemäße Bremsdruckeinstellung (durch Ansteuern der Pumpe 151 wie oben beschrieben), kann die modellmäßige Berechnung des Ist-Bremsdrucks dahingehend ergänzt bzw. modifiziert werden, daß eine oder mehrere bzw. die Pumpeneigenschaften insgesamt im Modell berücksichtigt werden.

Besondere Vorteile ergeben sich, wenn Drucksensoren in der Nähe der Einlaßventile und insbesondere an der Auslaßseite 113b der Einlaßventile installiert werden. Dies gilt insbesondere für die Räder der angetriebenen Achse, wenn die erfindungsgemäße Bremsdruckeinstellung zur Antriebsschlupfregelung dient.

Ganz allgemein kann gesagt werden, daß sich das erfindungsgemäße Verfahren und die erfindungsgemäße Vorrichtung besonders zur Antriebsschlupfregelung eignen. Üblicherweise sind die Pumpen 150-152 von ihrer Kapazität über vergleichsweise klein ausgelegt, so daß sie besonders zum Bewegen eher kleiner Volumina geeignet sind. In Abhängigkeit von der Pumpendimensionierung kann das erfindungsgemäße Verfahren auch für jede andere aktive Bremsdruckeinstellung, wie ASR, ESP und dgl. verwendet werden.

Das Hydraulikschaltbild der Fig. 1 zeigt insofern einen herkömmlichen Aufbau, als die Einlaßventile 113, 123, 133, 143 jeweils mit Rückschlagventilen 114, 124, 134, 144 versehen sind. Durch diese Rückschlagventile wird jeweils das Schließen der Einlaßventile ermöglicht, weil eine große "invertierte" Druckdifferenz vermieden wird. Nachfolgend wird ein Verfahren und eine Vorrichtung angegeben, mit denen die vier Rückschlagventile 114, 124, 134, 144 eingespart werden können. Die Erläuterung erfolgt bezugnehmend auf das Ventil 113. Für die anderen Einlaßventile gelten sinngemäß die gleichen Erklärungen. Ein Öffnen des Einlaßventils 113 (in der Regel Übergang vom strombeaufschlagten zum stromlosen Zustand) kann unmöglich werden, wenn der auslaßseitige Druck (bei 113b) deutlich größer als der einlaßseitige Druck (bei 113a) ist. Um eine solche invertierte Druckdifferenz zu vermeiden, sind bisher die Rückschlagventile 114 vorgesehen. Erfindungsgemäß kann nun die Druckdifferenz ermittelt werden. Liegt der auslaßseitige Druck P113b um mehr als ein Schwellenwert Psch über dem einlaßseitigen Druck P113a (ensprechend P113b - P113a > Psch), kann durch die Pumpe 150, 151 eine Druckerhöhung an der Einlaßseite 113a des Einlaßventils 113 erzeugt werden, wobei hierzu vorzugsweise das zweite Ventil 162 geschlossen wird. Durch Anheben des einlaßseitigen Drucks verringert sich der Differenzdruck, der vorher das Öffnen des Ventils unmöglich machte. Somit wird das Ventilöffnen wieder möglich, auch wenn ein Druckausgleich zwischen Einlaßseite und Auslaßseite ohne Rückschlagventil 114 nicht möglich ist.

Der Druckanstieg einlaßseitig am Einlaßventil kann nach einem oben beschriebenen Verfahren erfolgen. Da das mit Druck zu beaufschlagende Volumen vergleichsweise klein ist, kann eine kurzzeitige Betätigung der Pumpe ausreichen.

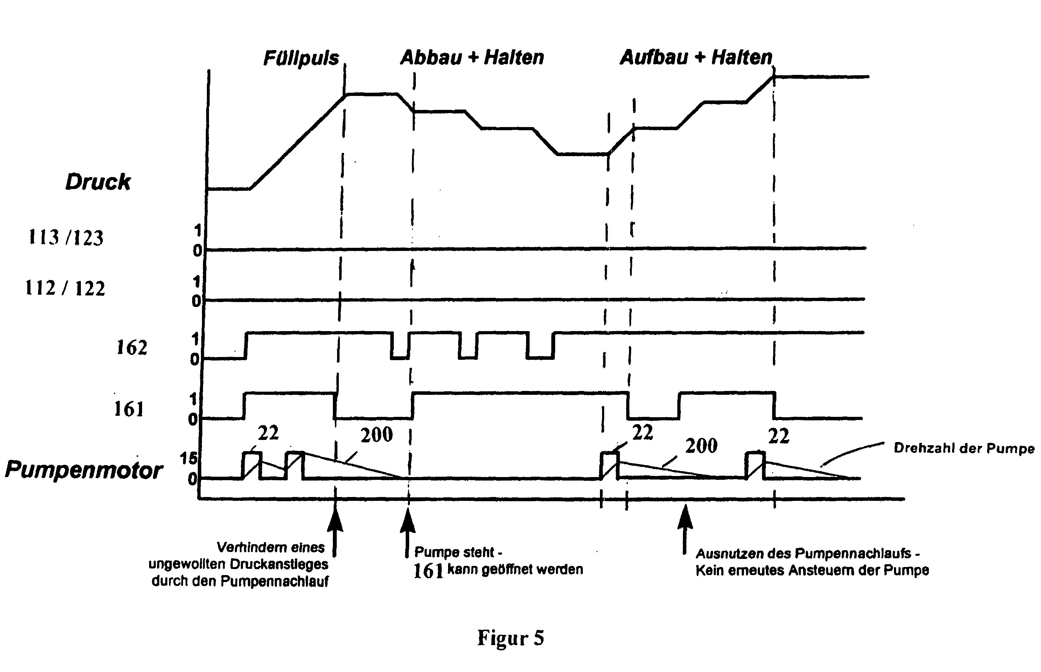

In Figur 5 ist die Ansteuerung des elekrischen Motors 150 der Pumpen 151, 152 mit pulsweitenmodulierten Minimal-Stromimpulsen 22 zwischen 5 und 20 Millisekunden (ms), vorzugsweise zwischen 12 und 16 ms, dargestellt. Die Bremsanlage kann wie in Figur 1 dargestellt eine Vorder-Hinterachs-Kreisaufteilung oder bevorzugt eine Diagonal-Kreisaufteilung aufweisen. Die Pumpen 151, 152 werden nach Maßgabe des berechneten Bremsdruckes oder Solldruckes der Räder bei einer Antriebsschlupfregelung in Abhängigkeit von ihrer Generatorspannung graduell so angesteuert, daß das Fördervolumen aus dem Pumpennachlauf berücksichtigt wird. Dabei wird während der Pulspausen die vom Pumpenmotor erzeugte Generatorspannung als Maß für die Pumpendrehzahl ausgewertet und mit einem Soll-Wert für die Pumpendrehzahl verglichen. Aus der Differenz wird die neue Größe für die Pumpenansteuerung abgeleitet. Beim Ansprechen der Antriebsschlupfregelung erzeugt die Steuerung bzw. Regelung 170-172 Minimalimpulse 22 in vorgegebenen, kurz aufeinanderfolgenden Zeitintervallen mittels denen die Pumpe in den Radbremsen der Antriebsräder Druck aufbaut. Durch die kurz aufeinanderfolgenden Minimalimpulse 22 wird das zum Regelbeginn in den Radbremsen vorhandene Luftspiel überwunden, und damit die Druckaufbaudynamik erhöht. Dabei ist das stromlos geschlossene (SG) erste Ventil 161 geöffnet. Das stromlos offene (SO) zweite Ventil 162 ist geschlossen, so daß die Pumpe das Hydraulikfluid aus dem Hauptzylinder 103 und dem Hydraukikfluidreservoir 104 über die SO-Einlaßventile 113, 133 in die Radbremsen 111, 121 fördert. Die Kennlinie für die Drehzahlen der Pumpen 151 oder 152 ist mit 200 bezeichnet. Wie die Kennlinie 200 zeigt, läuft die Pumpe nach der Ansteuerung mit dem letzten Minimalimpuls 22 mit abnehmenden Drehzahlen nach und fördert Hydraulikfluid. Um einen ungewollten Druckanstieg in den Radbremsen durch diesen Pumpennachlauf zu verhindern wird das erste Ventil 161 geschlossen, bis die Drehzahl der Pumpe einen vorgegebenen Grenzwert unterschreitet oder erreicht, wobei dieser Grenzwert auch Null sein kann. Ist im Niederdruckspeicher 165 Hydraulikfluid vorhanden, werden bei erreichtem Druckniveau nach einem Ausführungsbeispiel die SO-Einlaßventile 113, 133 geschlossen. Bevorzugt werden nach einem zweiten Ausführungsbeispiel die im Niederdruckspeicher oder in den Leitungen vohandenen Volumina von dem Druckmodell berechnet und bei der Ansteuerung der Pumpe sowie des ersten Ventils berücksichtigt.

Zweites SO-Ventil 162 bleibt geschlossen. Der in die Radbremsen eingesteuerte Bremsdruck wird auf dem Solldruck gehalten, das über die Ansteuerung der Pumpe mittels Minimalimpulse 22 der berechneten Druckanforderung entspricht. Erfordert die Antriebsschlupfregelung einen Abbau des Bremsdruckes in den Radbremsen, da sich beispielsweise der Reibwert des Fahrbahnuntergrundes geändert hat, wird das zweite SO-Ventil 162 geöffnet, das Hydraulikfluid strömt über die Einlaßventile 113, 123 und das zweite Ventil 162 in den Hauptbremszylinder 103 zurück.

Nachdem über die Generatorspannung des Motors eine Drehzahl der Pumpe festgestellt wurde, deren Grenzwert erreicht oder unterschritten ist, wird das erste SG-Ventil 161 geöffnet. Hydraulikfluid strömt über das erstes Ventil 161 in die Leitung und/oder zur Volumenaufnahme vorgesehene Kammern zwischen dem ersten Ventil 161 und der Pumpe 151 und steht somit unmittelbar am Eingang der Pumpe 151 zur Verfügung. Weitere Druckabbau- und Druckhaltephasen werden durch Öffnen und Schließen des zweiten SO-Ventils 162 geschaltet. Das erste SG-Ventil 161 ist während dieser Phase geöffnet oder geschlossen.

In der Phase "Druckaufbau" wird der Motor 150 der Pumpe mit einem oder mehreren Minimalimpuls 22 angesteuert. Während der Energiezufuhr zu dem Motor 150 steigt die Drehzahl 200 der Pumpe und damit deren Förderleistung kontinuierlich an. Es wird ein Bremsdruck in die Radbremsen bei offenem ersten SG-Ventil 161 eingesteuert. Das zweite SO-Ventil 162 ist geschlossen. Wie Figur 5 zeigt, dreht die Pumpe bei energielosem Motor mit abnehmenden Drehzahlen - dem Pumpennachlauf - weiter. Die Förderleistung der Pumpe bei energielosem Motor wird zum Druckaufbau ganz oder teilweise genutzt. Entsprechend wird das erste SG-Ventil 161 erst geschlossen, wenn die in der Steuerung bzw. Regelung 170-172 berechnete Druckanforderung dem Ist-Druck in den Radbremsen entspricht. Dabei wird der Ist-Druck bei energielosem Motor 150 der Pumpe unter teilweiser Ausnutzung des Pumpennachlaufs erreicht. Der Druckanstieg wird durch Schließen des ersten SG-Ventils 161 begrenzt.

Zum weiteren Aufbau des Druckes wird das erste Ventil 161 bei energielosem Motor 150 geöffnet, wenn über die vom Pumpenmotor erzeugte Generatorspannung eine Drehzahl der Pumpe sensiert wird. Der Druckaufbau in den Radbremsen erfolgt über die Förderleistung der Pumpe aus deren Nachlauf, bis der Grenzwert für die Drehzahl der Pumpe erreicht oder unterschritten ist. Der Grenzwert und damit die Drehzahl der Pumpe ist bevorzugt Null. Danach wird der Motor 150 der Pumpe mit einem Minimalimpuls 22 angesteuert, wenn eine Druckanforderung besteht. Hydraulikfluid wird in die Radbremsen eingesteuert, bis der Soll-Druck aus der Druckanforderung dem Ist-Druck in den Radbremsen entspricht. Das erste Ventil 161 wird geschlossen.

Der Druckaufbau ist durch die Phasen "Aufbau - Halten - Aufbau" gekennzeichnet. Das Einlaßventil 113 ist während des Druckaufbaus, also während der Phasen Aufbau, Halten, Aufbau geöffnet. Das Auslaßventil 112 ist geschlossen. Die Phasen bilden sich durch die Einstellung des Ist-Druckes in den Radbremsen unter Ausnutzung des Pumpennachlaufs. Ihre Aufeinanderfolge ist variabel. Sie ist Abhängig ob zum Zeitpunkt der ermittelten Druckanforderung ein Pumpennachlauf sensiert wird. Durch das Ausnutzen des Pumpennachlaufs wird die Ansteuerung des Motors 150 reduziert.

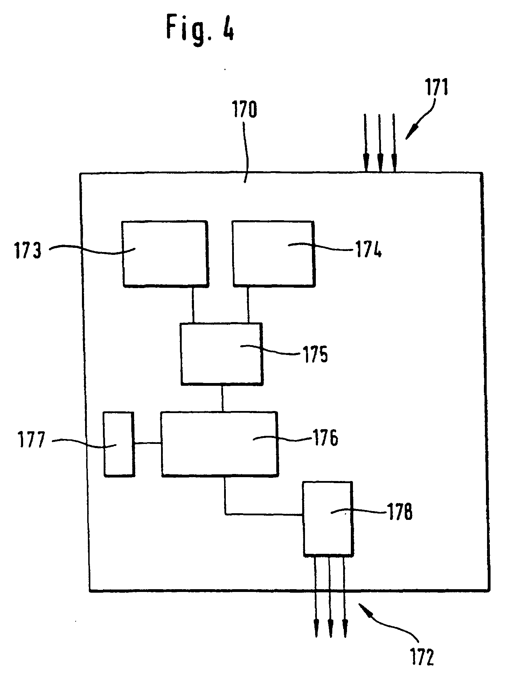

Fig. 4 zeigt eine Vorrichtung zum Öffnen eines Einlaßventils. Sie kann beispielsweise in der Steuerung 170 vorgesehen sein. Zusätzlich zu den in Fig. 4 gezeigten Komponenten enthält die Steuerung 170 weitere, nicht dargestellte Komponenten für die Wahrnehmung anderer Steuerungs- und Regelungsaufgaben. 173 symbolisiert ein Druckmodell, mit dem der Ist-Druck in der Radbremse ermittelt wird (entsprechend dem auslaßseitigen Druck P113b am Einlaßventil). 174 symbolisiert den einlaßseitigen Druck P113a, wie er sich beispielsweise nach Maßgabe von Sensorwerten ergeben kann, die beispielsweise von Sensoren 105 am Hauptzylinder ermittelt werden. In 175 wird die Differenz gebildet. In 176 wird die Differenz mit einem Schwellenwert verglichen, der einer Einrichtung 177 (Speicher, Register, Kennlinie o.ä.) entnommen wird. überschreitet die Differenz aus 175 den Schwellenwert aus 177, gibt die Entscheidungseinrichtung 176 ein Signal aus, das in einer Erzeugungseinrichtung 178 zur Erzeugung geeigneter Ausgangssignale 172 führt, wobei insbesondere Ausgangssignale für den Motor 150 und das erste und das zweite Ventil 161, 162 erzeugt werden.

In der Erzeugungseinrichtung 178 können gegebenenfalls noch weitere Bedingungen für den genannten eingriff abgefragt werden. Beispielsweise kann die Maßnahme unterbunden werden, wenn ein Bremseingriff des Fahrers festgestellt wird, instabile Fahrt erkannt wurde oder ähnliches. Anstelle eines Druckmodells 173 können, sofern verfügbar, auch Sensorwerte herangezogen werden, insbesondere dann, wenn Sensoren auslaßseitig an den Einlaßventilen angebracht sind.

Da für den Erfolg der erfindungsgemäßen Maßnahme in der Regel nur ein sehr kleines Volumen druckbeaufschlagt werden muß (zwischen den Einlaßventilen 113, 123 und dem zweiten Ventil 162), kann ein kurzzeitiger Betrieb der Pumpe 150, 151 ausreichend sein, um den nötigen Druckanstieg zur Verringerung der Druckdifferenz zu bewirken. Insofern kann ein kurzzeitiges, volles Anschalten der Pumpe, ggf. nur für wenige Umdrehungen eines Exzenters einer Exzenterpumpe, ausreichend sein. Die Pumpe kann aber auch nach dem oben beschriebenen Verfahren angesteuert werden.

Für die Einlaßventile 123, 133, 143 gelten sinngemäß die gleichen Ausführungen bezugnehmend ggf. auf die jeweils ihnen zugeordneten Pumpen, Ventile und Sensoren.

## Patentansprüche

1. Verfahren zur Bremsdruckeinstellung in einer mit einer elektrischen Hydraulikpumpe (150 - 152) versehenen Fahrzeug-Bremsanlage, mit den Schritten Ermitteln eines herrschenden Bremsdruckes oder Bestimmen eines Solldruckes, **gekennzeichnet durch** graduelles Ansteuern der Pumpe (150 - 152) nach Maßgabe des ermittelten Bremsdruckes oder des Solldruckes unter Berücksichtigung des Fördervolumens aus dem Pumpennachlauf (200).

2. Verfahren nach Anspruch 1, **dadurch gekennzeichnet, daß** die Energiezufuhr und/oder die Drehzahl und/oder die Förderleistung der Pumpe (150 - 152) nach Maßgabe des Solldruckes eingestellt wird.

3. Verfahren nach Anspruch 1 oder 2, **dadurch gekennzeichnet, daß** die Pumpe (150 - 152) pulsbreitenmodulierte Stromimpulse (22 - 26, 176) erhält.

4. Verfahren nach einem der Ansprüche 1 bis 3, **dadurch gekennzeichnet, daß** die Pumpe (150 - 152) pulsweitenmodulierte Stromimpulse zwischen 5 und 20 Millisekunden (ms) erhält.

5. Verfahren nach einem der Ansprüche 1 bis 4, **dadurch gekennzeichnet, daß** die Pumpe (150 - 152) nach Maßgabe des ermittelten Bremsdruckes oder Solldruckes in Äbhängigkeit von Ihrer Generatorspannung und/oder ihrer Förderleistung und/oder ihrer Drehzahl graduell angesteuert wird.

6. Verfahren nach einem der Ansprüche 1 bis 5, **dadurch gekennzeichnet, daß** die Pumpe (150 - 152) graduell angesteuert wird, wenn wenigstens eine der Bedingungen
a.) die Generatorspannung liegt unter einem vorgegebenen Grenzwert und/oder
b.) die Förderleistung liegt unter einem vorgegebenen Grenzwert und/oder
c.) die Drehzahl liegt unter einem vorgegebenen Grenzwert
erfüllt ist.

7. Verfahren nach einem der Ansprüche 1 bis 6, **dadurch gekennzeichnet, daß** der ermittelte Bremsdruck oder Solldruck bei abgeschalteter Pumpe (150 - 152) aus dem Fördervolumen des Pumpennachlaufs eingestellt wird.

8. Verfahren nach Anspruch 1 oder 2, **dadurch gekennzeichnet, daß** die Pumpe (150 - 152) einen Strom mit einstellbarer Amplitude erhält.

9. Verfahren nach einem der vorherigen Ansprüche, **dadurch gekennzeichnet, daß** die Hydraulikpumpe (150 - 152) das Hydraulikfluid vor die Einlaßseite des Einlaßventils (113, 123, 133, 143) der Radbremse (111, 121, 131, 141) fördert und bei der Bremsdruckeinstellung die Saugseite der Pumpe (150 - 152) über ein erstes Ventil (161) mit einer Hydraulikfluidquelle (104) verbunden und das Einlaß- (113, 123, 133, 143) und das Auslaßventil (122, 132, 142, 112) der Radbremse (111, 121, 131, 141) stromlos gestellt werden.

10. Verfahren nach Anspruch 9, **dadurch gekennzeichnet, daß** bei der Bremsdruckeinstellung die Verbindung der Einlaßseite des Einlaßventils (113, 123, 133, 143) mit der Hydraulikfluid-quelle (104) mittels eines zweiten Ventils (162) unterbrochen wird.

11. Verfahren nach Anspruch 10, **dadurch gekennzeichnet, daß** eine Druckabsenkung durch Öffnen des zweiten Ventils (162) und/oder des Auslaßventils (112, 122, 132, 142) erfolgt.

12. Verfahren nach einem der vorherigen Ansprüche, **dadurch gekennzeichnet, daß** der eingestellte Bremsdruck anhand eines Modells ermittelt wird, das eine oder mehrere Eigenschaften der Hydraulikpumpe (150 - 152) berücksichtigt.

13. Verfahren nach einem der Ansprüche 1 bis 11, **dadurch gekennzeichnet, daß** der Bremsdruck an der Einlaß- oder der Auslaßseite des Einlaßventils (113, 123, 133, 143) der Radbremse gemessen wird.

14. Verfahren nach einem der vorherigen Ansprüche, **dadurch gekennzeichnet, daß** es zur aktiven Bremsdruckregelung bzw. -steuerung verwendet wird.

15. Verfahren nach einem der Ansprüche 1 bis 14 **gekennzeichnet durch** die Schritte
Ermitteln der Differenz zwischen dem auslaßseitigen und dem einlaßseitigen Druck an einem Einlaßventil (113, 123, 133, 143) der Fahrzeug-Bremsanlage, und Erzeugen eines Druckanstiegs mit einer mit dem Verfahren nach einem der Ansprüche 1 bis 14 angesteuerten Hydraulikpumpe (150 - 152) an der Einlaßseite des Einlaßventils (113, 123, 133, 143) wenn die Differenz einen positiven Schwellenwert überschreitet.

16. Verfahren nach Anspruch 15, **dadurch gekennzeichnet, daß** die Hydraulikpumpe (150 - 152) über eine bestimmte Zeitdauer betrieben wird.

17. Vorrichtung zur Bremsdruckeinstellung in einer Fahrzeug-Bremsanlage, mit einer elektrischen Hydraulikpumpe (150 - 152), einer Einrichtung (170) zum Ermitteln eines herrschenden Bremsdruckes oder Bestimmen eines Solldruckes, **gekennzeichnet durch** eine Ansteuervorrichtung (170) zum graduellen Ansteuern der Pumpe (150 - 152) nach Maßgabe des ermittelten Brems-druckes oder des Solldruckes unter Berücksichtigung des Fördervolumens aus dem Pumpennachlauf.

18. Vorrichtung nach Anspruch 17, **dadurch gekennzeichnet, daß** die Ansteuervorrichtung (170) die Energiezufuhr und/oder die Drehzahl und/oder die Förderleistung der Pumpe (150 - 152) nach Maßgabe des Solldruckes eingestellt.

19. Vorrichtung nach Anspruch 17 oder 18, **dadurch gekennzeichnet, daß** die Ansteuervorrichtung (170) pulsbreiten-modulierte Stromimpulse (22 - 26) für die Pumpe (150 - 152) erzeugt.

20. Vorrichtung nach Anspruch 17 oder 19, **dadurch gekennzeichnet, daß** die Ansteuervorrichtung (170) einen Strom (27) mit einstellbarer Amplitude für die Pumpe (150 - 152) erzeugt.

21. Vorrichtung nach einem der Ansprüche 17 bis 20, **dadurch gekennzeichnet, daß** der Auslaß der Hydraulikpumpe (150 - 152) mit der Einlaßseite des Einlaßventils (113, 123, 133, 143) der Radbremse (111, 121, 131, 141) verbunden ist und bei der Bremsdruckeinstellung die Saugseite der Pumpe (150 - 152) über ein erstes Ventil (161, 163) mit einer Hydraulikfluidquelle (103) verbunden wird, wobei das Einlaß- und das Auslaßventil der Radbremse (111, 121, 131, 141) stromlos sind.

22. Vorrichtung nach Anspruch 21, **gekennzeichnet durch** ein zweites Ventil (162, 164), das bei der Bremsdruckeinstellung die Verbindung der Einlaßseite des Einlaßventils (113, 123, 133, 143) mit der Hydraulikfluidquelle (103) unterbricht.

23. Vorrichtung nach Anspruch 22, **dadurch gekennzeichnet, daß** zur Bremsdruckabsenkung das zweite Ventil (162, 164) geöffnet wird.

24. Vorrichtung nach einem der Ansprüche 17 bis 23, **gekennzeichnet durch** ein Modell (173) zur Ermittlung des Bremsdruckes, das Eigenschaften der Hydraulikpumpe (150 - 152) berücksichtigt.

25. Vorrichtung nach einem der Ansprüche 17 bis 24, **gekennzeichnet durch** einen Sensor an der Einlaß- oder der Auslaßseite des Einlaßventils (113, 123, 133, 143), der den Bremsdruck der Radbremse (111, 121, 131, 141) mißt.

26. Vorrichtung nach einem der Ansprüche 17 bis 25, **dadurch gekennzeichnet, daß** sie Teil einer aktiven Bremsdruckregelung bzw. -steuerung ist.

27. Vorrichtung nach einem der Ansprüche 17 bis 26 **gekennzeichnet durch** eine Ermittlungseinrichtung (175) zum Ermitteln der Differenz zwischen dem auslaßseitigen und dem einlaßseitigen Druck am Einlaßventil (113, 123, 133, 143), und einer mit einer nach einem der Ansprüche 15 bis 16 angesteuerten Hydraulikpumpe (150 - 152) zum Erzeugen eines Druckanstiegs an der Einlaßseite des Einlaßventils (113, 123, 133, 143), wenn die Differenz einen positiven Schwellenwert überschreitet.

28. Vorrichtung nach Anspruch 26, **dadurch gekennzeichnet, daß** die Hydraulikpumpe (150 - 152) über eine bestimmte Zeitdauer betrieben wird.

## Claims

1. Method of brake pressure adjustment in a vehicle brake system equipped with an electric hydraulic pump (150-152), comprising the following steps: detecting a prevailing brake pressure or determining a nominal pressure,
**characterized by** an actuation of the pump (150-152) by degrees according to the detected brake pressure or the nominal pressure in consideration of the delivery volume from the pump run-on (200).

2. Method as claimed in claim 1,
**characterized in that** the energy supply, and/or the rotational speed, and/or the delivery rate of the pump (150-152) is adjusted according to the nominal pressure.

3. Method as claimed in claim 1 or claim 2,
**characterized in that** the pump (150-152) receives pulse-width-modulated current pulses (22-26, 176).

4. Method as claimed in any one of claims 1 to 3,
**characterized in that** the pump (150-152) receives pulse-width-modulated current pulses between 5 and 20 milliseconds (ms).

5. Method as claimed in any one of claims 1 to 4,
**characterized in that** the pump (150-152) is actuated by degrees according to the determined brake pressure or nominal pressure in dependence on its generator voltage, and/or its delivery rate, and/or its rotational speed.

6. Method as claimed in any one of claims 1 to 5,
**characterized in that** the pump (150-152) is actuated by degrees when at least one of the following conditions is satisfied:
a) the generator voltage is below a predetermined limit value, and/or
b) the delivery rate of the pump is below a predetermined limit value, and/or
c) the rotational speed is below a predetermined limit value.

7. Method as claimed in any one of claims 1 to 6,
**characterized in that** the determined brake pressure or nominal pressure is adjusted from the delivery volume of the pump run-on, when the pump (150-152) is switched off.

8. Method as claimed in claim 1 or claim 2,
**characterized in that** the pump (150-152) receives a current with an adjustable amplitude.

9. Method as claimed in any one of the preceding claims,
**characterized in that** the hydraulic pump (150-152) delivers the hydraulic fluid to the inlet side of the inlet valve (113,123,133,143) of the wheel brake (111,121,131,141), and the suction side of the pump (150-152) is connected to a hydraulic fluid source (104) by way of a first valve (161), and the inlet valves (113,123,133,143) and outlet valves (122,132,142,112) of the wheel brake (111,121,131,141) are rendered de-energized during brake pressure adjustment.

10. Method as claimed in claim 9,
**characterized in that** the connection between the inlet side of the inlet valve (113,123,133,143) and the hydraulic fluid source (104) is interrupted by means of a second valve (162) during brake pressure adjustment.

11. Method as claimed in claim 10,
**characterized in that** pressure is decreased by opening the second valve (162) and/or the outlet valve (112,122,132,142).

12. Method as claimed in any one of the preceding claims,
**characterized in that** the adjusted brake pressure is determined by way of a model which takes into consideration one or more characteristics of the hydraulic pump (150-152).

13. Method as claimed in any one of claims 1 to 11,
**characterized in that** the brake pressure on the inlet side or outlet side of the inlet valve (113,123,133,143) of the wheel brake is measured.

14. Method as claimed in any one of the preceding claims,
**characterized in that** this method is used for the active brake pressure regulation or control.

15. Method as claimed in any one of claims 1 to 14,
**characterized by** the following steps: determining the difference between the outlet-side and the inlet-side pressure at an inlet valve (113,123,133,143) of the vehicle brake system, and generating a pressure rise on the inlet side of the inlet valve (113,123,133,143) by means of a hydraulic pump (150-152) actuated with the method as claimed in any one of claims 1 to 14, when the difference exceeds a positive threshold value.

16. Method as claimed in claim 15,
**characterized in that** the hydraulic pump (150-152) is operated for a defined time period.

17. Device for brake pressure adjustment in a vehicle brake system, with an electric hydraulic pump (150-152), a device (170) for detecting a prevailing brake pressure or determining a nominal pressure,
**characterized by** an actuation device (170) for actuating the pump (150-152) by degrees according to the determined brake pressure or the nominal pressure in consideration of the delivery volume from the pump run-on.

18. Device as claimed in claim 17,
**characterized in that** the actuation device (170) adjusts the energy supply, and/or the rotational speed, and/or the delivery rate of the pump (150-152) according to the nominal pressure.

19. Device as claimed in claim 17 or claim 18,
**characterized in that** the actuation device (170) generates pulse-width-modulated current pulses (22-26) for the pump (150-152).

20. Device as claimed in claim 17 or claim 19,
**characterized in that** the actuation device (170) generates a current (27) with an adjustable amplitude for the pump (150-152).

21. Device as claimed in any one of claims 17 to 20,
**characterized in that** the outlet of the hydraulic pump (150-152) is connected to the inlet side of the inlet valve (113,123,133,143) of the wheel brake (111, 121,131,141), and the suction side of the pump (150-152) is connected to a hydraulic fluid source (103) by way of a first valve (161, 163), and the inlet and outlet valves of the wheel brake (111,121,131,141) are de-energized during brake pressure adjustment.

22. Device as claimed in claim 21,
**characterized by** a second valve (162,164) which interrupts the connection between the inlet side of the inlet valve (113,123,133,143) and the hydraulic fluid source (103) during brake pressure adjustment.

23. Method as claimed in claim 22,
**characterized in that** the second valve (162, 164) is opened for brake pressure reduction.

24. Device as claimed in any one of claims 17 to 23,
**characterized by** a model (173) for determining the brake pressure which takes into consideration characteristics of the hydraulic pump (150-152).

25. Device as claimed in any one of claims 17 to 24,
**characterized by** a sensor on the inlet side or outlet side of the inlet valve (113,123,133,143) which measures the brake pressure of the wheel brake (111,121, 131,141).

26. Device as claimed in any one of claims 17 to 25,
**characterized in that** it is part of an active brake pressure regulation or control.

27. Device as claimed in any one of claims 17 to 26,
**characterized by** a detection device (175) for detecting the difference between the outlet-side and the inlet-side pressure at the inlet valve (113,123,133, 143), and a hydraulic pump (150-152) actuated as claimed in any one of claims 15 to 16 for generating a pressure rise on the inlet side of the inlet valve (113,123,133, 143) when the difference exceeds a positive threshold value.

28. Device as claimed in claim 26,
**characterized in that** the hydraulic pump (150-152) is operated for a defined time period.

## Revendications

1. Procédé de réglage de la pression de freinage dans une installation de freinage de véhicule pourvue d'une pompe hydraulique électrique (150-152), comportant les étapes suivantes : déterminer une pression de freinage régnante ou déterminer une pression de consigne, **caractérisé par** une commande progressive de la pompe (150-152) en fonction de la pression de freinage déterminée ou de la pression de consigne en tenant compte du débit dû à l'inertie de la pompe (200).

2. Procédé selon la revendication 1, **caractérisé en ce que** l'apport d'énergie et/ou la vitesse de rotation et/ou le débit de la pompe (150-152) est réglé en fonction de la pression de consigne.

3. Procédé selon la revendication 1 ou 2, **caractérisé en ce que** la pompe (150-152) reçoit des impulsions de courant (22-26, 176) modulées en largeur d'impulsion.

4. Procédé selon l'une des revendications 1 à 3, **caractérisé en ce que** la pompe (150-152) reçoit des impulsions de courant modulées en largeur d'impulsion entre 5 et 20 millisecondes (ms).

5. Procédé selon l'une des revendications 1 à 4, **caractérisé en ce que** la pompe (150-152) est commandée progressivement suivant la pression de freinage ou pression de consigne déterminée, en fonction de la tension de son générateur et/ou de son débit et/ou de sa vitesse de rotation.

6. Procédé selon l'une des revendications 1 à 5, **caractérisé en ce que** la pompe (150-152) est commandée progressivement, si est satisfaite à au moins l'une des conditions suivantes :
a.) la tension du générateur est inférieure à une valeur limite prédéfinie et/ou
b.) le débit est inférieur à une valeur limite prédéfinie et/ou
c.) la vitesse de rotation est inférieure à une vitesse limite prédéfinie.

7. Procédé selon l'une des revendications 1 à 6, **caractérisé en ce que** la pression de freinage ou pression de consigne déterminée est réglée, avec la pompe (150-152) hors service, à partir du débit d'inertie de la pompe.

8. Procédé selon la revendication 1 ou 2, **caractérisé en ce que** la pompe (150-152) reçoit un courant d'amplitude réglable.

9. Procédé selon l'une des revendications précédentes, **caractérisé en ce que** la pompe hydraulique (150-152) refoule le fluide hydraulique devant le côté d'admission de la soupape d'admission (113, 123, 133, 143) du frein de la roue (111, 121, 131, 141), et, au réglage de la pression de freinage, le côté aspiration de la pompe (150-152) est relié, par une première soupape (161), à une source de fluide hydraulique (104), et la soupape d'admission (113, 123, 133, 143) ainsi que la soupape d'échappement (122, 132, 142, 112) du frein de la roue (111, 121, 131, 141) ne sont pas parcourues par un courant.

10. Procédé selon la revendication 9, **caractérisé en ce qu'**au réglage de la pression de freinage, la liaison du côté d'admission de la soupape d'admission (113, 123, 133, 143) à la source de fluide hydraulique (104) est interrompue au moyen d'une deuxième soupape (162).

11. Procédé selon la revendication 10, **caractérisé en ce qu'**il se produit une réduction de la pression par ouverture de la deuxième soupape (162) et/ou de la soupape d'échappement (112, 122, 132, 142).

12. Procédé selon l'une des revendications précédentes, **caractérisé en ce que** la pression de freinage réglée est déterminée à l'aide d'un modèle qui tient compte d'une ou de plusieurs propriétés de la pompe hydraulique (150-152).

13. Procédé selon l'une des revendications 1 à 11, **caractérisé en ce que** la pression de freinage est mesurée sur le côté d'admission ou le côté d'échappement de la soupape d'admission (113, 123, 133, 143) du frein de la roue.

14. Procédé selon l'une des revendications précédentes, **caractérisé en ce qu'**il est utilisé pour la régulation active ou la commande de la pression de freinage.

15. Procédé selon l'une des revendications 1 à 14, **caractérisé par** les étapes suivantes :
déterminer la différence entre la pression côté échappement et la pression côté admission sur une soupape d'admission (113, 123, 133, 143) du système de freinage du véhicule, et
produire une augmentation de la pression avec une pompe hydraulique (150-152), commandée par le procédé suivant l'une des revendications 1 à 14, sur le côté d'admission de la soupape d'admission (113, 123, 133, 143), lorsque la différence dépasse une valeur de seuil positive.

16. Procédé selon la revendication 15, **caractérisé en ce que** la pompe hydraulique (150-152) est mise en marche pendant une durée déterminée.

17. Dispositif de réglage de la pression de freinage dans un système de freinage de véhicule, comportant une pompe hydraulique électrique (150-152), un dispositif (170) pour déterminer une pression de freinage régnante ou une pression de consigne, **caractérisé par** un dispositif de commande (170) pour la commande progressive de la pompe (150-152) en fonction de la pression de freinage déterminée ou de la pression de consigne en tenant compte du débit d'inertie de la pompe.

18. Dispositif selon la revendication 17, **caractérisé en ce que** le dispositif de commande (170) règle l'apport d'énergie et/ou la vitesse de rotation et/ou le débit de la pompe (150-152) en fonction de la pression de consigne.

19. Dispositif selon la revendication 17 ou 18, **caractérisé en ce que** le dispositif de commande (170) produit des impulsions de courant (22-26) modulées en largeur d'impulsion pour la pompe (150-152).

20. Dispositif selon la revendication 17 ou 19, **caractérisé en ce que** le dispositif de commande (170) produit un courant (27) d'amplitude réglable pour la pompe (150-152).

21. Dispositif selon l'une des revendications 17 à 20, **caractérisé en ce que** l'échappement de la pompe hydraulique (150-152) est relié au côté d'admission de la soupape d'admission (113, 123, 133, 143) du frein de la roue (111, 121, 131, 141) et, au réglage de la pression de freinage, le côté d'aspiration de la pompe (150-152) est relié, par une première soupape (161, 163), à une source de fluide hydraulique (103), la soupape d'admission et/ou la soupape d'échappement du frein de la roue (111, 121, 131, 141) n'étant pas parcourues par un courant.

22. Dispositif selon la revendication 21, **caractérisé par** une deuxième soupape (162, 164) qui, au réglage de la pression de freinage, interrompt la liaison du côté d'admission de la soupape d'admission (113, 123, 133, 143) avec la source de fluide hydraulique (103).

23. Dispositif selon la revendication 22, **caractérisé en ce que** pour abaisser la pression de freinage, on ouvre la deuxième soupape (162, 164).

24. Dispositif selon l'une des revendications 17 à 23, **caractérisé par** un modèle (173) pour déterminer la pression de freinage, qui tient compte de propriétés de la pompe hydraulique (150-152).

25. Dispositif selon l'une des revendications 17 à 24, **caractérisé par** un capteur sur le côté d'admission ou le côté d'échappement de la soupape d'admission (113, 123, 133, 143), qui mesure la pression de freinage du frein de la roue (111, 121, 131, 141).

26. Dispositif selon l'une des revendications 17 à 25, **caractérisé en ce qu'**elle fait partie d'une régulation ou commande active de la pression de freinage.

27. Dispositif selon l'une des revendications 17 à 26, **caractérisé par** un dispositif de détermination (175) pour déterminer la différence entre la pression côté échappement et la pression côté admission sur la soupape d'admission (113, 123, 133, 143), et une pompe hydraulique (150-152) commandée selon l'une des revendications 15 à 16, pour produire une augmentation de la pression sur le côté d'admission de la soupape d'admission (113, 123, 133, 143), lorsque la différence dépasse une valeur de seuil positive.

28. Dispositif selon la revendication 26, **caractérisé en ce que** la pompe hydraulique (150-152) est mise en service pendant une durée déterminée.
